# EUROPEAN PATENT APPLICATION

(11) **EP 1 498 797 A1**
(43) Date of publication of application: **19.01.2005**
(21) Application number: 03016030.3
(22) Date of filing: 15.07.2003
(51) Int. Cl.: G05G 9/047, B25J 17/02

(54) **Device for transmitting a movement having a parallel kinematics transmission structure providing three translational degrees of freedom**

(71) Applicant: Force Dimension S.à.r.l, 1015 Lausanne (CH)
(72) Inventor: Conti, Francois, 2072 Saint-Blaise (CH); Grange, Sébastien, 1020 Renens (CH); Helmer, Patrick, 1026 Denges (CH); Rouiller, Patrice, 1205 Genève (CH)
(74) Representative: Niederkofler, Oswald A., Dipl.-Phys.

(57) **Abstract**

The invention is directed to a device for transmitting a movement having a parallel kinematics transmission structure (3) providing three translational degrees a freedom, said structure comprising one base member (1), one moveable member (2), at least one rotative actuator (30) arranged on the base member (1), parallel kinematics chains coupling the base member to the moveable member, each chain comprising a pivoting control arm (10), wherein the rotary motion of the at least one rotative actuator (30) is transmitted to a respective pivoting control arm (10) so that any translational movement of the moveable member is transmitted into a rotational movement of the control arms or vice versa, and wherein the at least one rotative actuator (30) is arranged such that its axis (31) is substantially perpendicular to the rotation axis of the control arms (10). The parallel kinematics transmission structure comprises three parallel kinematics chains, each chain comprising a pivoting control arm and a pair of parallel linking bars hingedly mounted by two rotational degrees of freedom joints at one end to an extremity of the control arm and at the other end to the moveable member, thus forming a delta type arrangement, wherein each chain is provided with a respective rotative actuator and wherein the rotative actuators are arranged such that their axis are substantially parallel to each other. The movements between the rotative actuators and the control arms are transmitted by cable members (51).

## Description

### FIELD OF THE INVENTION

The present invention relates in general to movement transmission, and for example, to a device or assembly for transmitting a movement using a parallel kinematics mechanism, to a haptic device or system of a force-reflecting control interface, such as a hand controller for computers, game consoles, simulators or other systems, and to a movement transmission device for a parallel kinematics manipulator or a parallel kinematics measuring system.

### BACKGROUND OF THE INVENTION

The increasing need for enhanced human-computer interaction (HCI) is pushing for new interfaces that allow humans and machines to exchange a wider range of information. As one example among these new interfaces, so called haptic devices, that is, active interface devices applying tactile sensation and control to interaction with computer applications, are promised a place of choice. Haptic devices provide users with force-feedback information on the motion and/or force that they generate. Not only does haptic make difficult manipulation tasks possible or easier, it also opens the door to a wide range of new applications in the fields of simulation and assistance to human operators.

Numerous applications can benefit from haptic technology, ranging from teleoperation to scaled manipulation, as well as simulators and surgical aids. Moreover, force-feedback devices are moving to the consumer market, and are invading the gaming industry as well as unexpected other areas.

To give the user a precise feeling of the virtual model or real end-effector situation, the mechanical structure of the haptic device should have low inertia, high stiffness with low friction and no backlash. Parallel kinematics mechanisms are known for their high stiffness and low inertia, which enables large bandwidth transmission of forces.

The Ecole Polytechnique Fédérale Lausanne and its Institut de Systèmes Robotiques has recently developed a force reflecting human computer interface called delta haptic device (DHD). Manufactured by the applicant of the present application, said delta haptic device includes a parallel kinematics mechanism, essentially corresponding to the delta robotic structure (described in CH 672089, = US 4,976,582 of Clavel), providing three translatory degrees of freedom. A serial mounted wrist module provides further three rotational degrees of freedom.

The mechanical system of the mentioned delta robotic structure comprises a common base member and three functionally parallel kinematics chains, connecting said base member with a common movable member. Each of said parallel kinematics chains comprises a rotative actuator mounted on the base member, a control arm rigidly mounted at its first extremity on the shaft of the rotative actuator, a parallelogram of two linking bars, hingedly mounted on the one hand to the second extremity of the control arm and, on the other hand, to the movable member.

The delta haptic device known in the art has a similar mechanical system. In contrast with the aforementioned direct drive actuation, the motion of each rotative actuator is transmitted from the shaft to the corresponding control arm through a reduction gear. The reduction gears used in the art are toothed belts, cable drives or harmonic drive reduction system. A reduction is used in order to provide the necessary torque, whereby small and low-priced actuators may be mounted.

The delta haptic device provides large feedback forces throughout a remarkable range of motion. The device has high stiffness, decoupled translation and rotation, and very low inertia.

More extensive information regarding the delta haptic device is disclosed in the following publications of the Ecole Polytechnique Fédérale Lausanne (available at http://vrai-group.epfl.ch/publications.shtml), the disclosures of which are incorporated herein by reference:
- "Overview of the Delta Haptic Device", Sebastien Grange, François Conti, Patrice Rouiller, Patrick Helmer, Dr. Charles Baur, Institut de Systèmes Robotiques, Ecole Polytechnique Fédérale de Lausanne, Lausanne, Switzerland, published at Eurohaptics '01, Birmingham, England, July 2001, and
- "The Delta Haptic Device", Sebastien Grange, François Conti, Patrice Rouiller, Patrick Helmer, Dr. Charles Baur, Institut de Systèmes Robotiques, Ecole Polytechnique Fédérale de Lausanne, Lausanne, Switzerland, published online.

The delta haptic devices and the movement transmission structure comprised therein, as known from the aforementioned publications, satisfies from the point of view of the performance parameters, however, it is likewise essential for the success of such a device on the consumer market, to provide a compact handy product with pleasing design at an affordable price.

There is a need to provide a simple, compact and/or low priced movement transmission device or assembly, for example, to be used for a delta haptic device, a manipulator, a measuring device, or the like.

### SUMMARY OF THE INVENTION

According to an embodiment, there is provided a device or assembly for transmitting a movement, comprising at least one moveable member which is coupled to at least one parallel kinematics transmission structure each providing three translational degrees of freedom; at least one rotative actuator which is coupled to the parallel transmission structure over a control arm such that any translational movement is transmitted into a rotational movement, or vice versa, wherein the rotative actuator is arranged such that its axis is substantially perpendicular to the rotation axis of the control arm.

Further embodiments include a haptic device comprising such device for transmitting a movement, a manipulator for providing movements of at least three translational degrees of freedom to manipulation member, comprising such device for transmitting a movement, and a measuring system for providing at least three translational degrees of freedom to a sensor or sensor element, respectively.

### BRIEF DESCRIPTION OF THE DRAWINGS

The invention will be understood more fully from the following description of preferred embodiments with reference to the accompanying schematic drawings, which, however, should not be taken to limit the invention to the specific embodiments described, but are for explanation and understanding only. In the drawings:
- Fig. 1: shows a side view of the basic constituent parts of a haptic device comprising a movement transmission device according to one embodiment of the present invention,
- Fig. 2a: shows a side view of a parallel kinematics structure as used in the device of Fig. 1 in more detail, illustrating a control arm with a linking bar according one embodiment of the invention,
- Fig. 2b: shows a detailed view of the linking bars of Fig. 2a,
- Fig. 2c: shows a detailed view of the control arm of Fig. 2c,
- Fig. 3a: shows a top cross-sectional view of the device,
- Fig. 3b: shows a side cross-sectional view of one of the three rotative actuators of the device of Fig. 1,
- Fig. 4: shows another top cross-sectional view of a device according to another embodiment, with an alternative array of the rotative actuators,
- Fig. 5: shows a side sectional view of a rotative actuator according to one embodiment, with an integrated torsional spring,
- Fig. 6 a,b: show side cross-sectional and top views of a flexural articulation of the linking bars, respectively, according to one embodiment,
- Fig. 7: illustrates the basic constituent parts of a manipulator comprising a movement transmission device according to one embodiment of the present invention, and
- Fig. 8: illustrates the basic constituent parts of a measuring system comprising a movement transmission device according to another embodiment of the present invention.

### DETAILED DESCRIPTION OF EMBODIMENTS

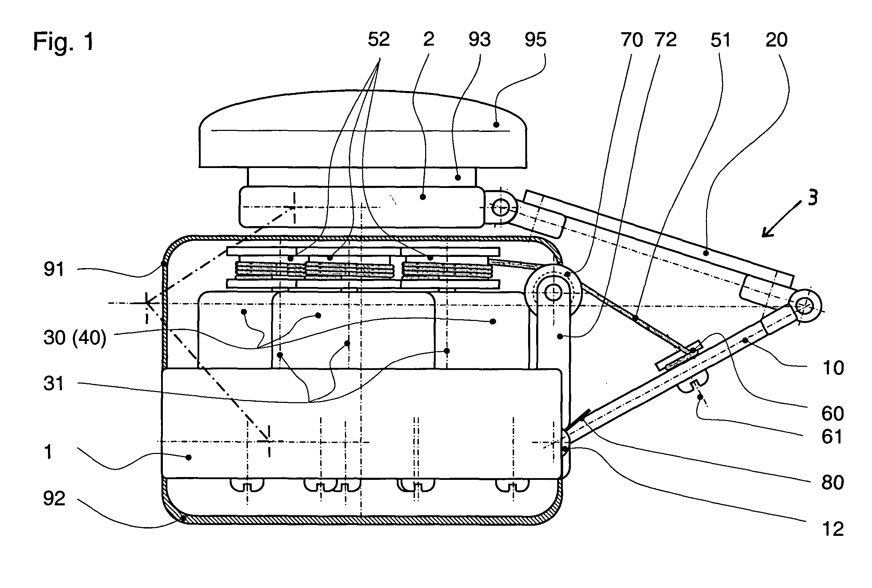

Fig. 1 illustrates the basic constituent parts of a movement transmission device or assembly for use in a haptic device, according to a first embodiment of the present invention. Before proceeding further with the detailed description of Fig. 1, however, a few items of the embodiments will be discussed.

According to one of the embodiments, there is provided a device for transmitting a movement between an input side and an output side, or vice versa, comprising: at least one moveable member arranged at one of the input and output sides, the moveable member being coupled to at least one parallel kinematics transmission structure each providing three translational degrees of freedom; at least one rotative actuator arranged at the other of the input and output sides, the rotative actuator being coupled to the parallel kinematics transmission structure over a control arm such that any translational movement is transmitted into a rotational movement, or vice versa, wherein the rotative actuator is arranged such that its axis is substantially perpendicular to the rotation axis of the control arm.

The movement transmission device according to another embodiment comprises a parallel kinematics motion transmission structure of a delta type as described above. It further comprises a three rotative actuators, one for each arm of the parallel kinematics motion transmission structure, the axis of the rotative actuators being substantially parallel to one another, and substantially perpendicular to the rotation axis of each arm. The rotative actuators are fixed with a base member and the motion is transmitted from the shaft of the rotative actuator to the corresponding control arm of the motion transmission structure by means of a cable system. To mention an example, this embodiment enables to produce a highly realistic and low cost delta haptic device that provides three translational degrees of freedom to a hand manipulable object. The actuators and transmission means are positioned such that their inertial contribution to the system is very low and in the same time the overall volume of the haptic device is bound in a minimum.

In one of the embodiments, the control arm is linked with the base member by means of a one degree of freedom rotative articulation. The rotative articulation may be a ball bearing, a plain bearing or a flexible hinge, as an example.

Further, in one of the embodiments a pair of parallel linking bars is hingedly mounted with the control arm at one end and with the common movable member at the other end. Each of these linking bars has a two rotational degrees of freedom link at both ends. The link may, for example, be a cardanic element or a pair of rotative articulations in series, whereby the axis of the first and the second articulation must not imperatively concur. For example, the rotative articulation may be a combination of ball bearings, plain bearings or flexible hinges. Alternatively, the linking bars may be provided with a spherical ball joint one or both ends thereof providing three rotational degrees of freedom. Thus, the linking bars may rotate around their own axis although this additional degree of freedom is not necessarily required for the operation of the device.

In another embodiment, a cable is fixed with the shaft of the rotative actuator at one end and fixed with the respective control arm at the other end.

In some embodiments, the rotative actuator exerts a tensile action on the respective control arm through the cable. By nature the cable can only exert traction. Thus, each control arm has at least one restoring element, such as to provide a restoring force against the tensile action of the rotative actuators. The restoring element may be a leaf spring, a helical torsion spring, a spiral spring, an elastic element or the like. The restoring element prestresses the control arm such as to "open" the control arms of the motion transmission structure.

In some embodiments, the restoring element may be located coaxial with the control arm rotation axis. Alternatively it may be located coaxial with the cable, between the control arm and a redirection member (described later). In this case restoring element may further comprise a bellows or a telescopic member, such that the cable is protected.

The motion transmission assembly according to an embodiment of the present invention can provide bi-directional forces to the end-effector while applying unidirectional forces with the rotative actuators. This embodiment requires only few additional elements with respect to a direct driven mechanism. These additional elements may be easily integrated in the device.

To coil-up and uncoil the cable, in some embodiments the shaft of the rotative actuators may comprise a fixedly mounted pulley, reel or drum, as an example. Said drum may include rims at both sides, to avoid the cable to derail. The element where the cable is wound up may comprise a helical-shaped groove, to ensure the correct coil-up, without overlapping.

In an embodiment, the cable may be directly fixed at a fixation point of the control arm of the motion transmission device, e.g. by means of a screw, a hook, a cable loop, a pressed cable stopper or any other fixation means. The fixation point is preferably located on the longitudinal axis of the control arm. The fixation point may further include a pin or bearing such as to allow that end of the cable to rotate with respect to the control arm, and to compensate the change of the incidence angle.

For a trouble-free redirection and coil-up, in some embodiments the cable may advantageously have circular cross section, however, other cable or band cross sections may be used. Advantageously the cable itself has good tensile strength and low flexural stiffness, preferably a steel wire rope or a polyamide filament.

According to another embodiment the movement transmission device comprises at least one redirection member for each control arm, the redirection member(s) being fixedly mounted on the base member and located between the control arm and the shaft of the respective rotative actuator. The redirection member is preferably located at a certain distance from the shaft of the rotative actuator, such as to grant an essentially perpendicular incidence of the cable on the shaft of the rotative actuator. Without the redirection member the angle of incidence of the cable on the shaft would change depending on the angle of the control arm of the parallel kinematics motion transmission structure. In a further embodiment, in order to reduce the friction with the cable, the redirection member may include a cable guide element, e.g. a pin made of a wear resistant material, with a low coefficient of friction. The cable guide element may include a freewheel pulley or the like. This measure ensures a minimal wear of the cable and the redirection member.

In some embodiments, the cable guide element has a low curvature such as to avoid the cable to detach from the guide element due to its own flexural stiffness. Cable damages due to excessively narrow redirection radii are eliminated. This and the previous measures ensure low impact on the dynamic behaviour of a haptic device comprising the parallel kinematics movement transmission device.

Advantageously, the base member of the parallel kinematics motion transmission structure is integrated in a base casing, for example of a haptic device, a manipulator, or the like. The base casing may further comprise seats for the three rotative actuators, at least part of the redirection members, apertures, threads and seats for mechanical and electrical connections and components.

In an advantageous embodiment the base casing is plastic injection moulded. The base casing may include the base member of the parallel kinematics motion transmission structure and the redirection members.

In a further embodiment the injection moulded base casing may include at least part of the parallel kinematics motion transmission structure. In this embodiment the rotative articulations may be shaped as flexural hinges of the same material as the casing. The linking bars may be joined with the control arm and respectively with the common movable member by means of double flexural hinges, i.e. two flexural hinges in series, the one rotated of a certain angle with respect to the other. In this way the essential elements of the mechanical structure of a haptic device can be manufactured in only one piece.

In another embodiment the three rotative actuators of the parallel kinematics motion transmission structure are arranged on the base member and mounted thereto. The axes of the actuators are parallel to one another, and perpendicular to the axis of the control arm, thus essentially perpendicular to the base member. Hence the rotative actuators may be arranged very close to one another, such that the casing may be very compact.

Optionally, the fixation point of the cable with the control arm is a point on the longitudinal axis of the control arm. The fixation point of the cable with the control arm, the redirection member, and the first contacting point of the cable on the drum are preferably arranged such that the base projection of the cable axis is aligned with the base projection of the longitudinal axis of the control arm. Unnecessary redirections are avoided in order to reduce the impact on the dynamic behaviour of the haptic device to a minimum.

In one of the embodiments, a torsional spring, e.g. a helical torsion spring or a spiral spring may be inserted coaxial with the rotative actuator, between the drum or the shaft of the rotative actuator and the base member or another element fixed with the base member. Alternatively the inner diameter of the torsional spring is slightly larger than the body of the rotative actuator, and the torsional spring encloses the body of the rotative actuator. In another embodiment, the torsional spring is contrued such that the prestressing action of the restoring element is compensated at least in part. Therewith the torsional spring supports and disburdens the rotative actuator when the cable is coiled-up. This avoids that the rotative actuator permanently applies a unidirectional torque in order to maintain a defined position of the parallel kinematics motion transmission structure. The above measure reduces the heating and the current consumption of the device. Preferably, the action of the force provided by the restoring element is almost completely compensated with the torsional spring. The torque of the rotative actuator can be used bidirectionally. In this manner a relatively weak and low priced actuator may be used.

Alternatively, said torsional spring may be arranged such as to rotate the drum in the uncoil direction, such as to support the aforementioned restoring element.

In a further embodiment the aperture angle of each control arm is measured by means of a angular position sensor, e.g. a rotary encoder, an angular resolver or a potentiometer (variable resistor), and the position of the movable member is calculated with these information. Said encoder may be located on the axis of the rotative actuator, such as to detect the rotation angle of the shaft or drum. Alternatively the encoder may be located on the rotation axis of the control arm, such that the aperture of the control arm is directly measured. To enhance the measuring resolution, a gear reduction or other transmission means may, for example, be added between the angular position sensor and the rotative actuator.

As an example for use of the movement transmission device, a haptic device according to an embodiment may comprise auxiliary features, e.g. a wrist module providing up to three rotational degrees of freedom, preferably with tactile feedback. The wrist module is mounted in series with the parallel kinematics motion transmission structure.

In another embodiment, the haptic device may further comprises control keys, control wheels, force grippers or other element used in the context of human computer interfaces known in the art.

In still another embodiment, the haptic device may comprise a force sensor. The force sensor is preferably located directly below the handle.

Returning now to Fig. 1, there is shown a haptic or force feedback device including a movement transmission assembly according to one embodiment of the present invention. As mentioned in the introduction, such a haptic device may be used as an active interface applying tactile sensation and control to interaction with computer applications or the like. Haptic devices provide users with force-feedback information on the motion and/or force that they generate. The haptic or force feedback device according to this embodiment comprises a parallel kinematics motion transmission structure 3 of the delta type, providing three translational degrees of freedom. For the sake of simplicity, only one chain of the parallel kinematics motion transmission structure 3 is represented in detail. In addition, three rotational degrees of freedom are provided by a rotational wrist module 93, coupled in series with said parallel kinematics motion transmission structure. The user may interact with the haptic device by means of handle 95, located at the top of the wrist module 93.

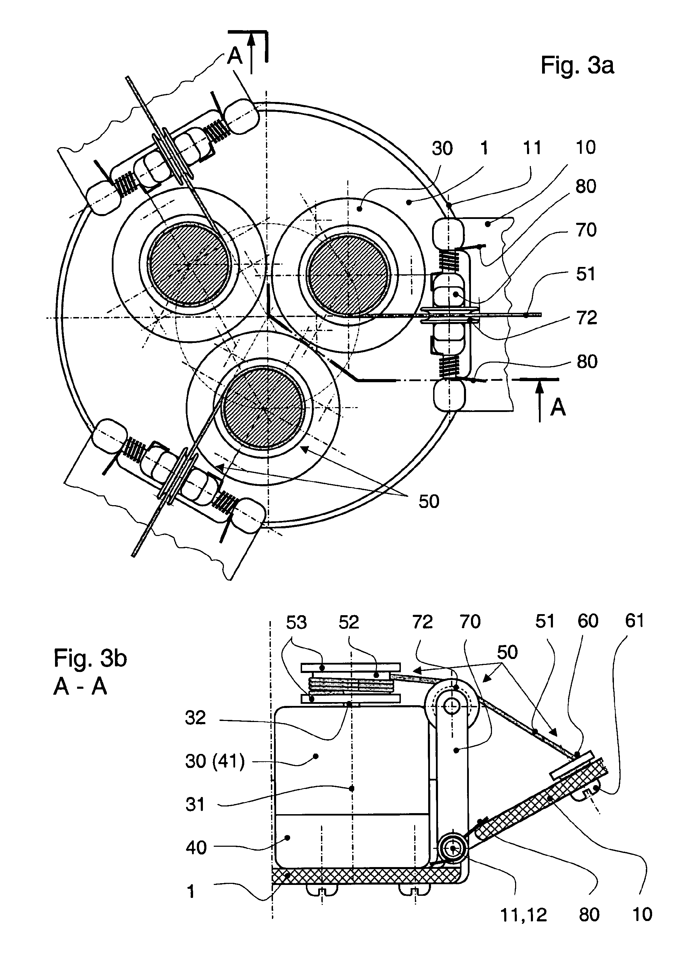

In this embodiment, the movement transmission device further comprises three rotative actuators 30, each provided with an angular position sensor 40 (not shown) and fixed with a common base member 1 of the device. Axis 31 of the rotative actuators 30 are parallel to one another and essentially perpendicular to the base member 1. The rotary motion of each of the rotative actuators 30 is transmitted to a respective pivoting control arm 10, which pivots over the axis 11, of each of the parallel kinematics motion transmission structure 3 by means of a cable transmission system 50 (see detailed description of Figs. 3a and 3b), and vice versa. The rotative actuators 30 are arranged such that their axis 31 are substantially perpendicular to the rotation axis 11 of the control arm 10. Further, the moveable member 2 is coupled to three parallel kinematics transmission structures 3 in a delta type arrangement, each being coupled to a respective rotative actuator 30, wherein the rotative actuators 30 are arranged such that their axis are substantially parallel to each other.

In one embodiment, for the safety of the user and to protect the device itself, the rotative actuators 30, rotary encoders 40, cable drums 52, redirection member 70 and the restoring elements 80 are arranged in a single casing, or are part of the same. The casing comprises a base member 1, a casing cover 91 and a casing bottom 92. The casing bottom part 92 accommodates a power supply or a connection therefor, a current amplifier, a microcontroller, and the electrical connections (not shown).

The mobile part of the movement transmission device is not included in the casing to contain the overall size of the haptic device.

In one of the embodiments, in a so called relaxed position (where control arms 10 are in an "open" position), the cylinder circumscribing the device with the control arms 10 has a diameter of about 200mm and a height of about 150mm. The complete casing of the device has a diameter of about 100mm and a height of about 75mm. The working area of the haptic device is a cylinder having a diameter, resp. height of about 70mm. Thus, the haptic device of this embodiment may be easily operated on a table, like an ordinary human computer interface, or directly in the users hands. In another embodiment, the device may also be integrated into a control panel or the like such as to have only a handle protruding from the panel and the other components of the device being hidden within the panel.

Alternatively, in another embodiment the device of the present invention may also be rotated by an angle and operated in this position.

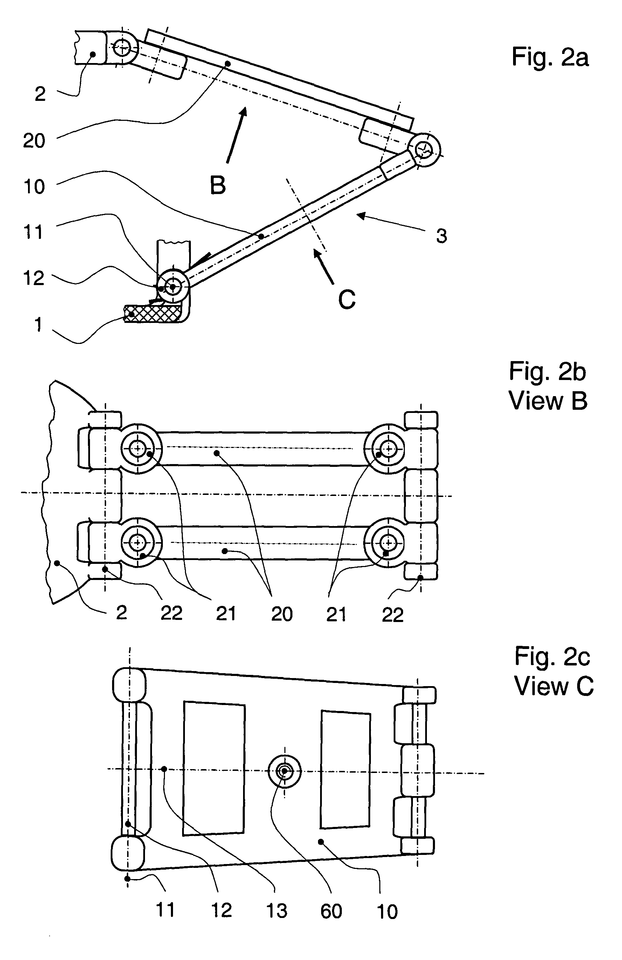

An exemplary design of a parallel kinematics transmission structure according to the invention is shown in Figs. 2a, 2b and 2c. The assembly is composed of a common fixed base member 1, a common movable member 2, a control arm 10 pivotable over a rotation axis 11, and a parallelogramm composed of a pair of parallel linking bars 20. The control arm 10 has a plain bearing 12 enabling one rotational degree of freedom over the rotation or pivoting axis 11. The linking bar 20 has a two rotational degree of freedom articulation at both ends. In this embodiment the two degree of freedom (dof) articulation is a combination of a plain bearing 22 with a serially mounted ball bearing 21. In Fig. 2b, the linking bars 20 are arranged on a common axis 22 which is, however, just exemplary not mandatory.

According to Figs. 3a and 3b the three parallel kinematics transmission chains have a similar construction. They may be arranged at 120° to one another around the vertical axis of the device, however the angle is not compulsorily 120°.

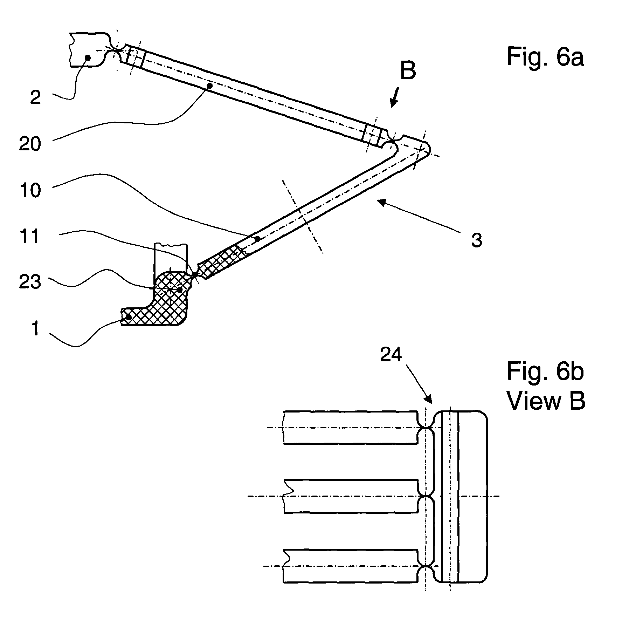

An alternative embodiment of the articulations of the control arms 10 and linking bars 20 is shown in Fig. 6a and 6b. Such type of flexible hinge articulations have been disclosed in the European Patent Application EP 1 113 191 A1 of Bottinelli, the disclosure of which are incorporated by reference herein. Fig. 6a shows the control arm 10 fixed with the base member 1 of the device by means of a simple flexible hinge articulation 23. The linking bars 20 are fixed with the control arm 10 and with the movable member 2 by means of a double flexible hinge articulation 24. In fig. 6b there are shown three linking bars 20, however at least two linking bars 20 are needed to link the control arm 10 with the movable member 2.

The device further comprises a cable transmission system 50 for the transmission of the movements between each actuator and the corresponding control arm of the parallel kinematics motion transmission structure.

Fig. 3a shows a top cross-sectional view of the device according to one of the embodiments, with three identical groups arranged at 120° to one another, each group comprising the control arm 10, the rotative actuator 30 and a cable transmission system 50. The axis of the rotative actuator is laterally shifted with respect of the longitudinal axis of the control arm 10. The amount of the shift is the sum of the cable drum radius and the cable radius. In this manner the cable is aligned with the longitudinal axis of the control arm (top view).

It can be seen that the rotative actuators 30 are very close to one another, with only a small air gap. The actuators may also be attached together, such as to further reduce the volume of the device.

Fig. 3b shows a partial side cross-sectional view through the half base member 1, part of the control arm 10, one of the three rotative actuators 30 including the cable transmission system 50. One end of the cable 51 is fixed with the drum 52 and wrapped around it. The drum 52 has a rim 53 at both sides. The other end of the cable 51 is anchored at a fixation point 60 by means of a screw 61.

An essentially vertical redirection member 70 is fixed at the border of base 1. The redirection member comprises a freewheel pulley 72. The highest contact point of the cable 51 on the freewheel pulley 72 corresponds approximately with the height of the cable drum 52.

The cable transmission system 50 of the present invention is particularly advantageous because of the low inertia, the low space requirement and the low pricing.

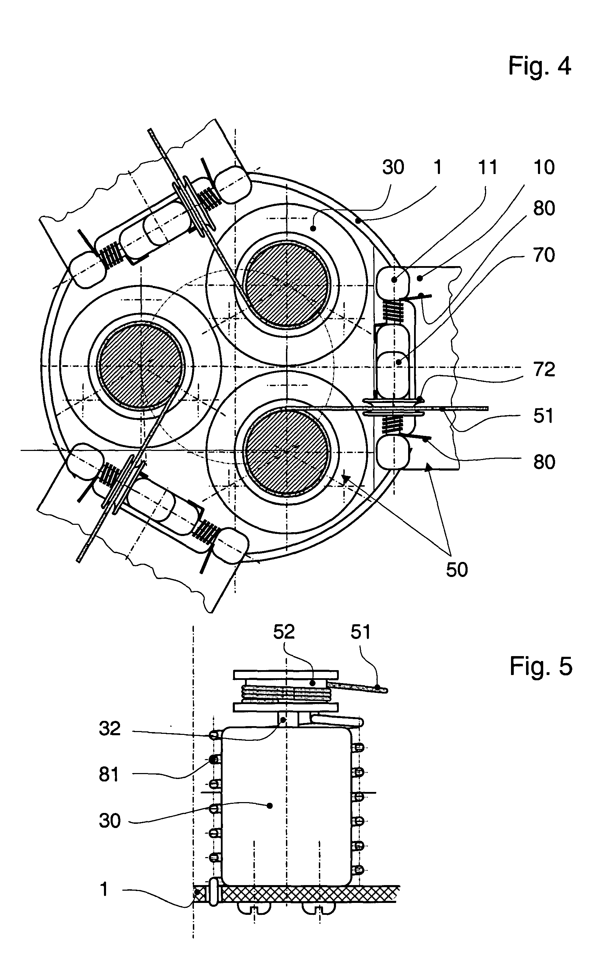

Fig. 4 is top cross-sectional view of the device according to another embodiment. Other than the arrangement shown in Fig. 3a, the rotative actuators shown in Fig. 4 are arranged such that the control arm 10 may be more closely to the center of the haptic device. The three rotative actuators 30 are shifted 60° about the central axis of the device with respect to the longitudinal axis 13 of the control arms 10. In this embodiment the volume of the casing may be even smaller.

Fig. 5 is a side sectional view of a rotative actuator 30, with an integrated torsional spring 81. The base member 1 and the cable drum 52 are prepared to hold the respective end of the torsional spring 81. In this representation the action of torsional spring 81 is opposite to the force of the restoring element 80 (not shown).

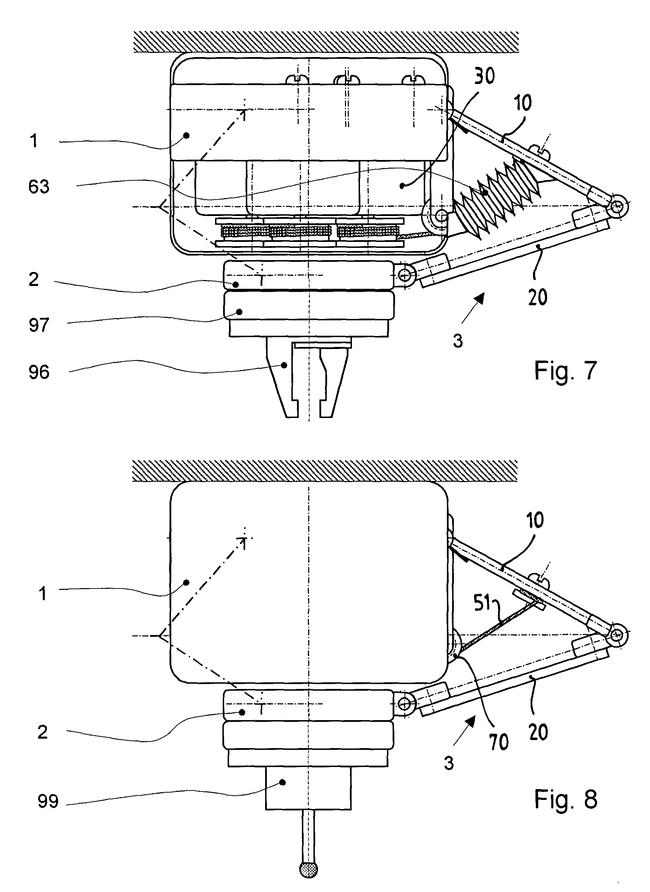

As mentioned above, the movement transmission device of the invention may employed in various applications. As another example, Fig. 7 illustrates a manipulator incorporating an embodiment of the movement transmission device for providing movements of three translational and one rotational degree of freedom to a gripper. The same or equivalent features have the same reference numerals as in the illustration of Fig. 1. Other to the arrangement shown in Fig. 1, the device shown in Fig. 7 is turned upside down and fixed at a base. The manipulator comprises a device for transmitting a movement according one of the embodiments the present invention. The parallel kinematics motion transmission structure 3 provides three translational degrees of freedom to a movable member 2. The movable member 2 is further provided with a rotation axis 97 permitting a rotation about the vertical axis of the device and a manipulation member such as a gripper assembly 96 is mounted to the movable member 2 in series.

The manipulator further comprises a bellows 63 and a spiral spring (not shown) located between a control arm 10 and a redirection 72 member of the parallel kinematics structure which corresponds to those described in respect of the embodiment of Fig. 1. The bellows 63 protects the cable transmission system 50 and all elements inside the casings 90, 91, 92 from dust contamination. The spiral spring (not shown) is parallel with or integrated in the bellows 63 and supports the restoring element 80.

In a further embodiment, the device may also comprise force sensors (not shown), such to detect the forces in each direction. Obviously the device may comprise any other kind of gripper, tool, or other end effector.

As another example of use of the motion transmission device, Fig. 8 shows a low cost coordinate measuring system for providing movements of three translational degrees of freedom to a probe or sensor element 99. The arrangement of the measuring system is similar as for the manipulator of Fig. 7, i.e. the device shown in Fig. 8 is also turned upside down and fixed at a ceiling. The same or equivalent features have the same reference numerals as in the illustration of Fig. 1.

Although the invention has been described herein with respect to specific embodiments thereof, the appended claims are not to be construed as limited to those embodiments, but rather to include any modifications an variations of the invention which may occur to one of ordinary skill in the art which fairly fall within its scope.

## Claims

1. A device for transmitting a movement, comprising:
- at least one moveable member (2) which is coupled to at least one parallel kinematics transmission structure (3) each providing three translational degrees of freedom;
- at least one rotative actuator (30) which is coupled to the parallel transmission structure (3) over a control arm (10) such that any translational movement is transmitted into a rotational movement, or vice versa;
- wherein the rotative actuator (30) is arranged such that its axis (31) is substantially perpendicular to a rotation axis (11) of the control arm (10).

2. The device according to claim 1, wherein the moveable member (2) is coupled to three parallel kinematics transmission structures (3) in a delta type arrangement, each being coupled to a respective rotative actuator (30), wherein the rotative actuators (30) are arranged such that their axis are substantially parallel to each other.

3. The device according to claim 2, wherein the rotative actuators (30) are arranged on a common base member (1) of the device in a close relationship to each other.

4. The device according to one of the preceding claims, further comprising a cable member (51) to transmit the movements between the rotative actuator (30) and the control arm (10).

5. The device according to claim 4, wherein the cable member (51) is coupled to a shaft of the rotative actuator (30) at one end and to the respective control arm (10) at the other.

6. The device according to one of the preceding claims, wherein at least some of the articulations (23) of the parallel kinematics transmission structure (3) are flexible hinge articulations.

7. The device according to claim 6, wherein at least two of the base member, control arm, linking bar and flexible hinge articulations are made from one piece.

8. The device according to one of the preceding claims, wherein the control arm (10) is provided with a restoring element (80) such as to provide a restoring force against the force exerted by the rotative actuator (30).

9. The device according to one of the claims 4-8, wherein the shaft of the rotative actuator (30) is adapted to enable secure coiling and uncoiling of the cable member (51).

10. The device according to one of the claims 4-9, wherein the cable member (51) is coupled at a fixation point (60) of the control arm (10) such as to allow the end of the cable to rotate with respect to the control arm (10).

11. The device according to one of the preceding claims, further comprising at least one redirection member (70) for each control arm (10), wherein each redirection member (70) is fixedly mounted on a base member of the device and located between the control arm (10) and the shaft of the respective rotative actuator (30).

12. The device according to claim 11, when referred to one of claims 4-10, wherein the redirection member (70) is located in a distance from the shaft of the respective rotative actuator (30) such as to allow an appropriate incidence of the cable member (51) on the shaft of the actuator (30).

13. The device according to one of the claims 11-12, further comprising a torsional spring (81) arranged to bias the shaft of the rotative actuator (30).

14. The device according to claim 13, wherein the torsional force of the spring (81) is such that the prestressing action of the restoring element is at least partly compensated.

15. A haptic device for providing a user with force-feedback information, comprising a device for transmitting a movement according to one of the preceding claims.

16. The haptic device according to claim 15, further comprising a sensor for measuring the aperture angle of each control arm (10) and a processor for calculating the position of the moveable member (2) based on the results of the measurement.

17. The haptic device according to claims 15 or 16, further comprising a wrist module arranged in series with the parallel transmission structure (3) and adapted to provide at least one rotational degrees of freedom.

18. The haptic device according to claim 17, wherein the wrist module is adapted to provide a tactile feedback.

19. The haptic device according to one of the claims 15-18, further comprising control keys, control wheels, force grippers or other elements used for a human computer interface.

20. The haptic device according to one of the claims 15-19, further comprising a force sensor located underneath the wrist module.

21. A manipulator for providing movements of at least three translatinal degrees of freedom to a manipulation member (96), comprising a device for transmitting a movement according to one of the claims 1-14.

22. A measuring system for providing at least three translatinal degrees of freedom to a sensor element (99), comprising a device for transmitting a movement according to one of the claims 1-14.
